# EUROPÄISCHE PATENTSCHRIFT

(11) **EP 0 865 719 B1**
(45) Veröffentlichungstag und Bekanntmachung des Hinweises auf die Patenterteilung: **30.01.2002**
(21) Anmeldenummer: 98104418.3
(22) Anmeldetag: 12.03.1998
(51) Int. Cl.: A01C 17/00

(54) **Schleuderscheibe für einen Schleuderstreuer**
Spreading disc for a broadcaster
Plateau disque pour épandeur

(30) Priorität: 21.03.1997 DE 19711941
(43) Veröffentlichungstag der Anmeldung: 23.09.1998
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE)

(56) Entgegenhaltungen:
- DE-A- 1 582 067
- FR-A- 1 432 165
- GB-A- 2 075 322

## Beschreibung

Die Erfindung betrifft eine Schleuderscheibe für einen Schleuderstreuer gemäß des Oberbegriffes des Patentanspruches 1.

Ein derartiger Schleuderstreuer ist aus der GB-A-2 075 322 bekannt geworden. Diese Schleuderscheibe weist einen nach unten umgebogenen, umlaufenden Randbereich auf. Auf dieser Schleuderscheibe sind zwei Wurfschaufeln winkelverschwenkbar in unterschiedlichen Winkeln zur Radialen anstellbar angeordnet. Die Stellung der Wurfschaufeln wird mittels einer Flügel-, Rändel- oder Knebelschraube eingestellt. Es hat sich in einigen Fällen gezeigt, daß der Randbereich der Schleuderscheibe nicht optimal ausgebildet ist.

Der Erfindung liegt die Aufgabe zugrunde, auf einfache Weise einen vorteilhaft ausgebildeten Randbereich der Schleuderscheibe zu schaffen.

Diese Aufgabe wird erfindungsgemäß dadurch gelöst, daß der Randbereich im Querschnitt gesehen S-förmig ausgebildet ist. Infolge dieser Maßnahme wird in überraschend einfacher Weise ein vorteilhaft ausgebildeter Randbereich geschaffen. Hierdurch wird durch diese Ausbildung des Randbereiches der Schleuderscheibe eine in sich stabilere Schleuderscheibe erreicht. Somit kann bei einer gleichbleibenden oder größeren Stabilität die Scheibe aus einem dünneren Material als bisher hergestellt werden. Dieser so ausgebildete Randbereich ist insbesondere auch von Vorteil, daß sich im Bereich, in dem die Knebelschraube angeordnet ist, ein abgerundeter Bereich befindet an dem der Bediener seine Hände beim Anziehen oder Lösen der Knebelschraube nicht verletzen kann.

Aufgrund der Ausbildung des S-förmigen Randes verläuft der innere und nach unten umgebogene Randbereich in seinem äußeren Bereich in einem etwa horizontalen verlaufenden Bereich aus.

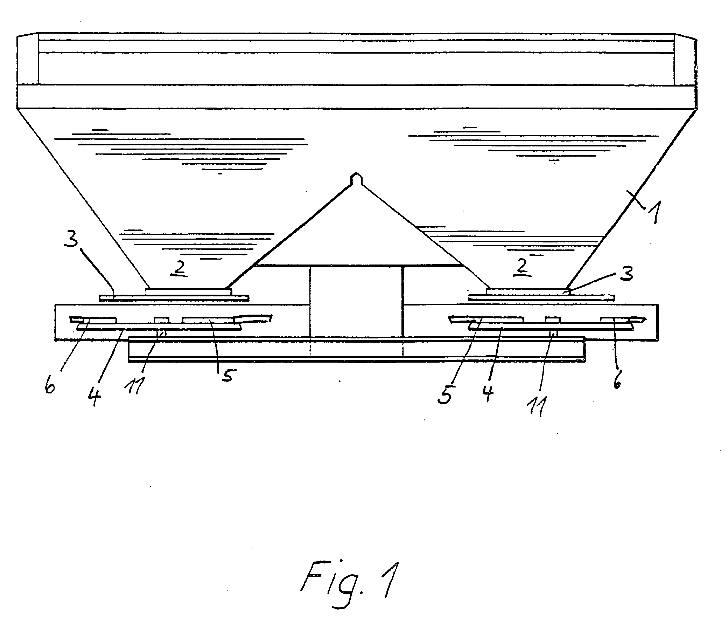

Weitere Einzelheiten der Erfindung sind der Beispielsbeschreibung und den Zeichnungen zu entnehmen. Hierbei zeigen
- Fig.1: den Schleuderstreuer in der Ansicht von hinten und in Prinzipdarstellung

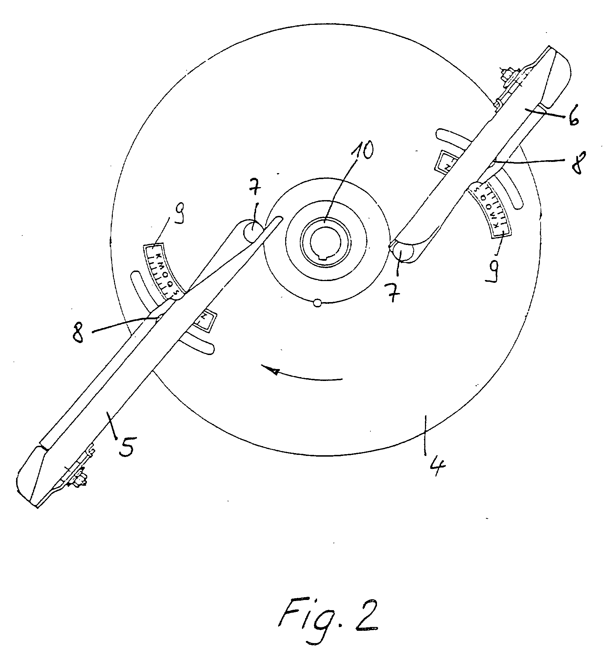

- Fig.2: die in Fahrtrichtung gesehen linke Schleuderscheibe in der Draufsicht und in einem größeren Maßstab,
- Fig.3: die Schleuderscheibe im Schnitt, jedoch ohne Wurfschaufeln und
- Fig.4: die Schleuderscheibe im Schnitt mit darauf montierten winkelverstellbaren Wurfschaufeln.

Der Schleuderstreuer weist den Vorratsbehälter 1 mit den zwei trichterförmigen Ausläufen 2, die von Dosierorganen 3 verschlossen sind auf. Mittels der Dosierorgane 3 wird den darunter rotierend angetriebenen Schleuderscheiben 4 in einstellbaren Mengen das Material, welches sich im Vorratsbehälter 1 befindet, zugeführt.

Die Schleuderscheiben 4 weisen die beiden winkelverschwenkbaren Wurfschaufeln 5 und 6 auf, die mit jeweils einer inneren Befestigung 7 und einer Knebelschraubenbefestigung 8 im äußeren Bereich in unterschiedlichen Winkeln zur Radialen anhand der Skalen 9 einstellbar sind. Im Zentrum der Schleuderscheiben 4 ist jeweils die Nabe 10 angeordnet, mittels welcher die Schleuderscheiben 4 auf die Schleuderscheibenantriebswelle 11 aufsetzbar sind.

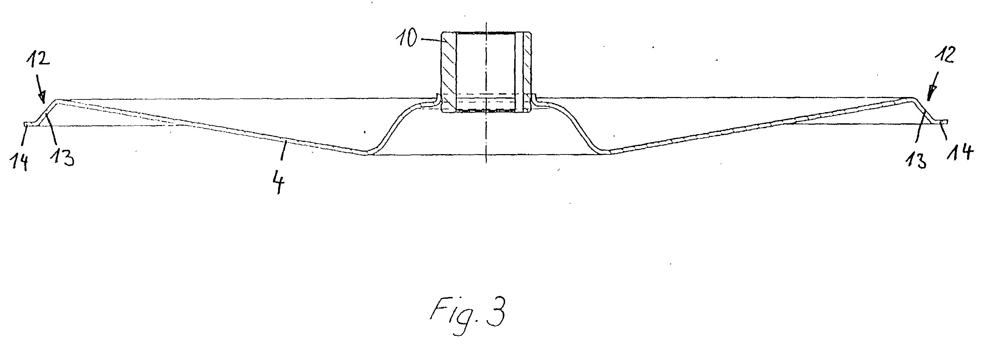

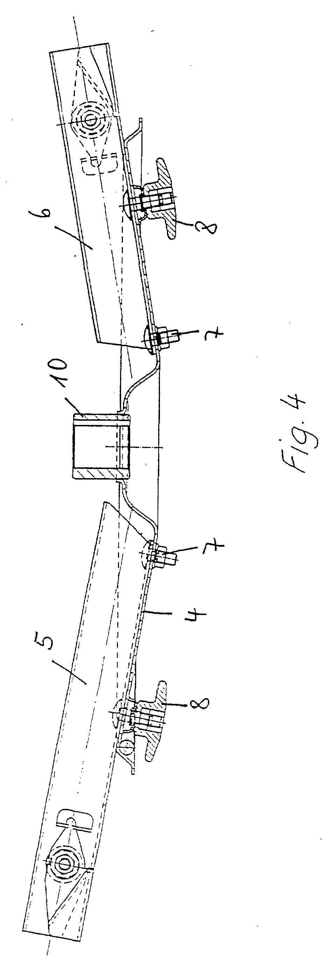

Der Randbereich 12 der Schleuderscheiben ist im Querschnitt gesehen S-förmig ausgebildet, wie die Fig.3 und 4 zeigen. Der innere und nach unten umgebogene Rand 13 des Randbereiches 12 geht in einem etwa horizontal verlaufenden Steg 14 über. Durch den S-förmigen Randbereich 12 wird eine erhebliche Stabilisierung der Schleuderscheibe 4 erreicht. Weiterhin kann der Bediener des Streuers, der die Wurfschaufeln 5 und 6 einstellt und mittels der Knebelschraube 8 fixiert, sich an der abgerundeten Kante 14 nicht verletzen. Diese Kante 14 ist aufgrund ihrer Ausformung gradlos ausgebildet. Der Steg 14 weist von der Mutter 8 weg.

## Patentansprüche

1. Schleuderscheibe für Schleuderstreuer, wobei die Schleuderscheibe einen nach unten umgebogenen, umlaufenden Randbereich aufweist, **dadurch gekennzeichnet, daß** der Randbereich (12) irn Querschnitt gesehen S-förmig ausgebildet ist.

2. Schleuderscheibe nach Anspruch 1, **dadurch gekennzeichnet, daß** der innere und nach unten umgebogene Randbereich (12) in seinem äußeren Bereich in einen etwa horizontal verlaufenden Bereich (14) übergeht.

3. Schleuderscheibe nach einem oder mehreren der vorstehenden Ansprüche, **dadurch gekennzeichnet, daß** auf der Schleuderscheibe (4) in Scheibenebene verschwenkbare Wurfschaufeln (5, 6) angeordnet sind, daß die Wurfschaufeln (5, 6) mittels unterhalb der Schleuderscheibe (4) angeordnete, einen handgriffähnlichen Bereich aufweisende Scheiben oder Muttern (8) im Winkel fixierbar sind, daß das frei umlaufende Ende (14) des Randbereiches (12) der Scheibe von der Schraube oder Mutter (8) wegweist.

## Claims

1. Centrifugal disc for centrifugal broadcasters, wherein the centrifugal disc includes a downwardly bent-over, surrounding edge region, **characterised in that** the edge region (12) is S-shaped when viewed in cross-section.

2. Centrifugal disc according to claim 1, **characterised in that** the internal and downwardly bent-over edge region (12) extends, in its outer region, into a substantially horizontally extending region (14).

3. Centrifugal disc according to one or more of the preceding claims, **characterised in that** throwing vanes (5, 6), which are pivotable in the disc plane, are disposed on the centrifugal disc (4), **in that** the throwing vanes (5, 6) are securable at an angle by means of discs or nuts (8), which are disposed beneath the centrifugal disc (4) and include a handle-like region, and **in that** the freely surrounding end (14) of the edge region (12) of the disc points away from the screw or nut (8).

## Revendications

1. Disque d'épandage pour épandeur centrifuge, le disque ayant une zone marginale périphérique, recourbée vers le bas,
**caractérisé en ce que**
la zone de bord (12) a en coupe une forme de S.

2. Disque d'épandage selon la revendication 1,
**caractérisé en ce que**
la zone de bord (12) intérieure, recourbée vers le bas, se transforme dans sa partie extérieure en une zone (14) sensiblement horizontale.

3. Disque d'épandage selon l'une ou plusieurs des revendications précédentes,
**caractérisé en ce que**
le disque (4) comporte dans son plan des pales d'éjection (5, 6) qui peuvent pivoter et les pales d'éjection (5, 6) se bloquent dans leur position angulaire à l'aide de vis ou écrous (8) installés sous le disque d'épandage (4) et ayant une zone de préhension, et l'extrémité (14) de la zone de bord (12) qui tourne librement du disque est à l'opposé de la vis ou de l'écrou (8).
